# EUROPÄISCHE PATENTSCHRIFT

(11) **EP 3 555 491 B1**
(45) Veröffentlichungstag und Bekanntmachung des Hinweises auf die Patenterteilung: **12.02.2020**
(21) Anmeldenummer: 18729085.3
(22) Anmeldetag: 30.05.2018
(51) Int. Cl.: F16C 33/20, F16C 27/02, F16C 27/06, F16F 1/38

(54) **LAGERBUCHSE**
BEARING BUSH
COUSSINET DE PALIER

(30) Priorität: 19.06.2017 DE 102017113437; 22.02.2018 WO PCT/EP2018/054437
(43) Veröffentlichungstag der Anmeldung: 23.10.2019
(73) Patentinhaber: Vibracoustic AG, 64293 Darmstadt (DE)
(72) Erfinder: WERNER, Philipp, 21339 Lüneburg (DE); KARDOES, Hilrich, 21423 Winsen (DE); FIRSZT, Bartolomeo, 21376 Gödenstorf (DE); HELMKE, Oliver, 21641 Apensen (DE)
(74) Vertreter: Flügel Preissner Schober Seidel
(86) Internationale Anmeldenummer: PCT/EP2018/064260
(87) Internationale Veröffentlichungsnummer: WO 2018/234002

(56) Entgegenhaltungen:
- EP-A2- 0 697 298
- EP-A2- 1 013 961
- WO-A1-2015/012350
- JP-A- H06 346 083

## Beschreibung

Die vorliegende Erfindung betrifft eine Lagerbuchse, insbesondere eine Gleitlagerbuchse, zur Lagerung eines Kraftfahrzeugteils, aufweisend ein Innenrohr aus einem Metall, eine Gleithülse aus einem ersten Kunststoff, die drehbeweglich auf dem Innenrohr gelagert ist, und ein Elastomerlager, das die Gleithülse umgibt und wenigstens einen ersten Elastomerkörper und eine Außenhülse aufweist.

Eine Lagerbuchse der eingangs genannten Art dient zur Lagerung eines Kraftfahrzeugteils, insbesondere eines Fahrwerksteils, um auftretende Schwingungen zu dämpfen und/oder zu tilgen. Wird die Lagerbuchse im Fahrzeug eingesetzt, wo hohe Torsionswinkel auftreten können, wie beispielsweise im Fahrwerk als Blattfederaugenlager für eine Blattfeder oder als Fahrerhauslager im Nutzfahrzeugbereich, dann ist es erforderlich, dass sich die Außenhülse gegenüber dem Innenrohr verdrehen kann, um eine Beschädigung des Elastomerkörpers zu vermeiden. Derartige Lagerbuchsen werden auch als Gleitlagerbuchsen bezeichnet. Aus EP 0 697 298 B1 geht eine Gleitlagerbuchse hervor, die ein Innenrohr und eine drehbeweglich auf dem Innenrohr angeordnete Gleithülse und eine auf der Gleithülse angeordnete Außenbuchse aufweist. Auf die Außenbuchse ist außenumfangsseitig ein Elastomerkörper aufvulkanisiert, der von einem Stützring umgeben ist.

Ferner geht aus EP 1 245 415 B1 eine Gleitlagerbuchse hervor, die ein Innenrohr, eine darauf gleitend drehbeweglich, konzentrisch angeordnete Gleithülse und einen an die Gleithülse anvulkanisierten Elastomerkörper aufweist. Um die Reibeigenschaften zu verbessern, ist die Gleithülse auf ihrer inneren Umfangsfläche mit einer Gleitschicht versehen, wobei die Gleitschicht aus einem Polytetrafluorethylen-Compound-Material besteht.

Darüber hinaus ist in EP 1 013 961 A2, das die Merkmale des Oberbegriffs von Anspruch 1 zeigt, eine Gleitlagerbuchse offenbart, die ein Innenrohr aus Stahl, eine drehbeweglich auf dem Innenrohr angeordnete Gleithülse, ein Druckverteilungsrohr, das auf die Gleithülse aufgeschoben ist, ein Elastomerkörper, der an das Druckverteilungsrohr anvulkanisiert ist, und eine Außenhülse, die an den Elastomerkörper anvulkanisiert ist, aufweist. Das Gleitlagerrohr kann ein Kunststoffrohr mit einer radial inneren Gleitschicht oder ein Stahlrohr mit einer radial inneren porösen Zinnbronzeschicht und einer darin verankerten Kunststoff-Gleitschicht sein. Als Kunststoff-Gleitschichten werden Polytetrafluorethylen oder Polyoxymethylen verwendet.

In DE 10 2004 031 302 A1 geht eine Gleitlagerbuchse hervor, die eine Innenhülse aus Stahl, eine die Innenhülse umgebende Gleitschicht aus Kunststoff, eine die Gleitschicht umgebenden Außenhülse aus Aluminium, einen Elastomerkörper, der an die Außenhülse anvulkanisiert ist, und eine Aufnahmehülse, die an den Elastomerkörper anvulkanisiert ist, aufweist.

Darüber hinaus geht aus GB 2284865 eine Gleitlagerbuchse mit einem Innenrohr aus Metall, einer Gleithülse aus Kunststoff und einem an die Gleithülse anvulkanisierten Elastomerkörper hervor. Auf einer Außenumfangsfläche des Innenrohrs können eine Gleitschicht aus Epoxidharz oder ein Lacksystem, welches mit reib- oder verschleißmindernden Additiven, wie beispielsweise Polytetrafluorethylen-Partikeln oder Molybdändisulfid versehen sind, aufgebracht sein.

Der vorliegenden Erfindung liegt die Aufgabe zugrunde, eine Lagerbuchse, insbesondere eine Gleitlagerbuchse, zu schaffen, die verbesserte Gleit- und Verschleißeigenschaften aufweist und zudem kostengünstig in der Herstellung ist.

Zur Lösung der Aufgabe wird eine Lagerbuchse mit den Merkmalen des Anspruchs 1 vorgeschlagen.

Vorteilhafte Ausgestaltungen der Lagerbuchse sind Gegenstand der abhängigen Ansprüche.

Eine Lagerbuchse zur Lagerung eines Kraftfahrzeugteils, weist ein Innenrohr aus einem Metall, eine Gleithülse aus einem ersten Kunststoff, die drehbeweglich auf dem Innenrohr gelagert ist, und ein Elastomerlager auf, das die Gleithülse umgibt und wenigstens einen ersten Elastomerkörper und eine Außenhülse aufweist, wobei auf einer Außenumfangsfläche des Innenrohrs eine Gleitschicht aus einem zweiten Kunststoff aufgebracht ist, wobei der erste Kunststoff und der zweite Kunststoff eine Gleitpaarung entweder aus zwei verschiedenen Polymeren aus den Gruppen der Polyamide, der Polyoxymethylene, der Polyketone, der Fluorpolymere, der Polyethylenterephthalate oder der Polybutylenterephthalate gebildet, oder die Gleitpaarung wird aus Polyketon gegen Polyketon gebildet, wobei die Polymere der Gleitpaarungen jeweils in einer kontinuierlichen, thermoplastischen Polymerphase vorliegen.

Der Erfindung liegt die Erkenntnis zugrunde, dass durch den Einsatz einer Gleitpaarung aus zwei verschiedenen Polymeren aus den Gruppen der Polyamide (PA), der Polyoxymethylene (POM), der Polyketone (PK), der Fluorpolymere, der Polyethylenterephthalate (PET) oder der Polybutylenterephthalate (PBT) oder einer Gleitpaarung Polyketon gegen Polyketon sehr gute tribologische Eigenschaften eingestellt werden können, wenn beide Schichten eine kontinuierliche, thermoplastische Polymerphase ausbilden. Die Gleitschicht und die Gleithülse bestehen aus unterschiedlichen Kunststoffklassen der Klassen Polyamid (PA), Polyoxymethylen (POM), Polyketon (PK), Fluorpolymere, z. B. Polytetrafluorethylen (PTFE), Polyethylenterephthalat (PET) oder Polybutylenterephthalate (PBT). Alternativ können die Gleitschicht und die Gleithülse aber auch beide aus Polyketon bestehen. Durch die als kontinuierliche Polymerschicht ausgeführte Gleitschicht auf dem Innenrohr wird ein Hybridinnenrohr beziehungsweise -kern geschaffen, das verbesserte Gleit- und Verschleißeigenschaften aufweist. Ferner, da die Gleitschicht aus thermoplastischen Polymeren aus den Gruppen PA, POM, PK, PET, PBT und PTFE eine kontinuierliche Phase bildet, kann das Hybridinnenrohr direkt als zweiter Gleitpartner dienen, ohne dass eine zusätzliche Gleithülse in das Bauteil integriert werden muss. Somit ist die Lagerbuchse kostengünstig in der Herstellung. Die Reibpaarung bestehend aus kontinuierlichen Phasen aus zwei thermoplastischen Polymeren aus den Gruppen PA, POM, PK, PET, PBT und PTFE weisen zudem geringe Adhäsionskräfte und damit einen geringen Reibkoeffizienten und somit verbesserte Gleiteigenschaften auf. Ferner, wenn die Gleithülse aus Polyamid mit einem Schmelzpunkt höher als 200 °C ist, kann unmittelbar der Elastomerkörper des Elastomerlagers an die Gleithülse anvulkanisiert werden, da der Schmelzpunkt von einigen Polyamiden, zum Beispiel von PA6 oder PA66, höher ist als der Schmelzpunkt von Polyoxymethylen. Darüber hinaus da die Gleitschicht eine geschlossene Polymerschicht auf dem Innenrohr ausbildet, dient die Gleitschicht als Korrosionsschutz für das Innenrohr. Die Gleitschicht kann mittels Pulverbeschichtung, insbesondere mittels elektrostatischer Pulverbeschichtung, auf das Innenrohr aufgebracht sein. Hierzu liegt die Gleitschicht als Pulver vor, das auf das Innenrohr im Pulverbeschichtungsverfahren, insbesondere im elektrostatischen Pulverbeschichtungsverfahren aufgebracht wird. Die Gleithülse aus Kunststoff kann im Spritzgussverfahren hergestellt sein, im Falle von PTFE z. B. durch Press- und Sinterverfahren.

Ferner ist erkannt worden, dass der Einsatz einer Gleitschicht aus PA, POM, PK, PET, PBT und PTFE keine Präzisionsnachbearbeitung des Innenrohrs aus Metall erfordert. Vielmehr wird auf eine für eine Haftung geeignete, kostengünstig herzustellende Oberfläche des Metalls, zum Beispiel einer gestrahlten Oberfläche oder einer Konversionsschicht, die Gleitschicht aus PA, POM, PK, PET, PBT und PTFE aufgetragen. Während des dem elektrostatischen Pulverbeschichtungsprozess nachgeschalteten Umschmelzprozess, zum Beispiel im Durchlaufofen, bei dem das Pulver in die geschlossene Oberflächenschicht gebracht wird, kühlt das Polymer sehr langsam ab und kann daher hohe Kristallinitätsgrade auch an der Oberfläche ausbilden. Das Resultat ist eine hochkristalline, raue Oberfläche, durch die der Verschleiß minimiert und störende Einlaufeffekte nahezu vollständig vermieden werden können.

Da die Rauigkeit bedingt durch den Kristallisationsvorgang entsteht, nimmt sie mit zunehmendem Kristallinitätsgrad tendenziell zu. Das Co-Polymer von Polyoxymethylen hat mit ca. 75 % einen besonders hohen Kristallinitätsgrad und damit eine besonders deutliche Rauigkeit. Bei geschmierten Systemen führt diese Rauigkeit zu einem besonders guten tribologischen Verhalten, da die Senken der rauen Oberfläche als Schmiermitteldepot im mikroskopischen Maßstab dienen. Die Kombination einer Gleitschicht aus Polyoxymethylen mit einem Gleitkörper aus Polyamid oder Polyketon, unter der Verwendung eines Schmierstoffes ist daher eine besonders zu bevorzugende Gleitpaarung.

Zudem weisen teilkristalline Polymere wie Polyoxymethylen, Polyamid, Polyethylenterephthalat, Polybutylenterephthalat, Polytetrafluorethylen oder Polyketon, die mittels elektrostatischer Pulverbeschichtung als Gleitschicht auf das Substrat aufgebracht werden, nach dem Umschmelzprozess einen sehr hohen Kristallinitätsgrad nahe des theoretisch maximal erreichbaren Wertes auf, insbesondere auch an der Oberfläche. Die im Spritzguss beobachtete Spritzhaut, welche sich häufig durch einen hohen amorphen Anteil, aber auch durch Entmischungen möglicher Additive auszeichnet, wird durch Aufbringen mittels Pulverbeschichtung nicht beobachtet. Hierdurch ergibt sich ein ausgezeichneter Verschleißwiderstand und Einlaufeffekte werden dadurch nahezu vollständig vermieden.

In einer vorteilhaften Ausgestaltung ist das Polyoxymethylen ein Polyoxymethylen-Copolymer (POM-C) oder ein Polyoxymethylen-Homopolymer (POM-H). Bevorzugt wird POM-C oder POM-H als Gleitschicht eingesetzt. POM-C hateinen Kristallinitätsgrad von ca. 75 % und weist eine besonders hohe Zähigkeit und Abriebfestigkeit auf. Kommt das Polyoxymethylen als Gleithülse zum Einsatz, so ist POM-H eine vorteilhafte Wahl, da der theoretische Kristallinitätsgrad von POM-H sogar noch höher bei ca. 90 % liegt und damit eine Gleithülse von besonders hoher Härte und Festigkeit geschaffen wird. Dadurch weist die Lagerbuchse eine hohe Lebensdauer auf. Als Alternative zum POM kann auch ein Polybutylenterephthalat zum Einsatz kommen, insbesondere, wenn sein höherer Schmelzpunkt gefordert ist. Auf eine Gleithülse aus PBT könnte zum Beispiel ein Elastomer direkt aufvulkanisiert werden.

In einer vorteilhaften Ausgestaltung ist das Polyamid ein aliphatisches Polyamid oder ein teilaromatisches Polyamid. Ein aus der Gruppe der Polyamide verwendeter Gleitreibpartner ist kostengünstig, gegen Polyoxymethylen als Reibpartner besonders verschleißresistent und weist in dieser Kombination gute Gleiteigenschaften auf. Aliphatische Polyamide können Polyamid 6 (PA6), Polyamid 12 (PA12), Polyamid 46 (PA46), Polyamid 66 (PA66) oder Polyamid 666 (PA666) sein. Wenn die Gleitbuchse aus Polyamid ist und die Elastomerspur außenumfangsseitig auf die Gleitbuchse aufvulkanisiert wird, so ist bevorzugt PA6 oder PA66 zu verwenden. Polyamid 6 (PA6), Polyamid 46 (PA46), Polyamid 66 (PA66) oder Polyamid 666 (PA666) weisen einen hohen Schmelzpunkt auf, so dass mit üblichen Vulkanisationstemperaturen eine direkte Haftung zu einem Naturkautschuk-Compound hergestellt werden kann. Somit sind diese Werkstoffe geeignet, um diese als Gleithülse mit direkt aufvulkanisiertem Elastomer beziehungsweise Gummi einzusetzen. Zu diesen Werkstoffen können am Markt verfügbare oder in der Elastomerindustrie eingesetzte Haftmittel eine gute Haftung herstellen. Wenn auf die Gleithülse keine Elastomerspur aufvulkanisiert wird, sondern diese formschlüssig und/oder kraftschlüssig mit der Gleithülse verbunden wird, wird bevorzugt PA12 eingesetzt, welches im Zusammenspiel Polyoxymethylen hervorragende tribologische Eigenschaften aufweist.

In einer vorteilhaften Ausgestaltung weist die Gleitschicht und/oder die Gleithülse wenigstens ein Additiv auf. Dadurch werden die Gleiteigenschaften der Gleitlagerbuchse verbessert. In einer vorteilhaften Ausgestaltung weist das Polyamid, das Polyoxymethylen, das Polyethylenterephthalat, das Polybutylenterephthalat und/oder das Polyketon wenigstens ein Additiv auf. Dadurch werden die tribologischen Eigenschaften der Gleitpaarung weiter verbessert. Zudem verbessern Additive die mechanischen und/oder thermischen Eigenschaften des Kunststoffs. Vorteilhaft ist das wenigstens eine Additiv derart in die die kontinuierliche Schicht bildende polymere Gleitschicht eingearbeitet, dass das Additiv auch in der Oberfläche der kontinuierlichen Gleitschicht angeordnet ist und so dort sofort tribologisch aktiv werden kann. Dieses kann dadurch erreicht werden, dass das Kunststoffpulver für die Gleitbeschichtung ein Compound aus Polyamid, Polyoxymethylen, Polyethylenterephthalat, Polybutylenterephthalat oder Polyketon und dem Additiv beziehungsweise den Additiven ist.

In einer vorteilhaften Ausgestaltung weist das Additiv Polytetrafluorethylen (PTFE), Graphit, Kohlenstoffnanofasern, Kohlenstofffasern, Aramidfasern, Mineralien, Molybdändisulfid, Talkum, Öle, Wachse, Glaskugeln und/oder Glasfasern auf. Diese Additive werden in einem der Pulverbeschichtung vorgeschalteten Prozessschritt mit der polymeren Hauptkomponente mittels Compoundierung vermischt, homogenisiert, gemahlen und anschließend als Pulver bereit gestellt. Wird dieses Pulver in einem elektrostatischen Pulverbeschichtungsprozess auf den Kern aufgebracht, so kann eine sehr homogene Verteilung der Additive bis in die Randschicht in Kombination mit einem hohen Kristallinitätsgrad der Randschicht erreicht werden. Die Gefahr der Entmischung, wie sie zum Beispiel bei Lackierprozessen oder Pulverbeschichtungsprozessen auf Basis von Duromeren besteht, entfällt nahezu vollständig hierdurch. Ebenfalls die Tendenz, dass sich eine für Spritzgussverfahren typische, amorphe Randschicht einstellt. Hierdurch hat die Gleitpaarung während der gesamten Einsatzzeit gleichmäßige tribologische Eigenschaften.

In einer vorteilhaften Ausgestaltung weist der Kunststoff an der Oberfläche der Gleitschicht einen Kristallinitätsgrad von mindestens 80 % seines maximalen theoretischen Wertes auf.

Die Gleitschicht kann mittels eines Pulverbeschichtungsverfahrens aufgebracht sein. Bevorzugt wird die Gleitschicht mittels eines elektrostatischen Pulverbeschichtungsverfahrens aufgebracht. Dadurch kann kostengünstig eine homogene, kontinuierliche Gleitschicht aus Polyoxymethylen, Polyamid, Polyethylenterephthalat, Polybutylenterephthalat, Polytetrafluorethylen oder Polyketon auf das Innenrohr aufgebracht werden. Wird eine Gleitschicht aus Polyoxymethylen, Polyamid, Polyethylenterephthalat, Polybutylenterephthalat, Polytetrafluorethylen oder Polyketon mittels eines elektrostatischen Pulverbeschichtungsprozesses aufgebracht, so ist eine statistische Verteilung der Additive derart zu erreichen, dass die Additive auch im Neuzustand unmittelbar nach der Beschichtung bereits an der Oberfläche der Polyoxymethylen-, Polyamid-, Polyethylenterephthalat-, Polybutylenterephthalat-, Polytetrafluorethylen- oder Polyketon- -Schicht vorzufinden sind. Sie sind dann dort sofort mobil und können nahezu ohne Einlaufeffekte sofort tribologisch aktiv wirken. Ferner führt der elektrostatische Pulverbeschichtungsprozess, bei dem das Pulvergemisch zum Beispiel in einem Umlaufofen aufgeheizt und auf dem Substrat umgeschmolzen wird, während des abschließenden langsamen Abkühlungsvorgangs zu einer Polyoxymethylen-, Polyamid-, Polyethylenterephthalat-, Polybutylenterephthalat-, Polytetrafluorethylen- oder Polyketon- - Schicht mit einem über den gesamten Querschnitt nahezu homogenen Kristallinitätsgrad nahe des theoretischen Maximums. Ferner kann mittels der Pulverbeschichtung eine nahezu geschlossene Polymerschicht auf das Innenrohr aufgebracht werden, die als sehr guter Korrosionsschutz für das Innenrohr dient. Die sich einstellende Rauigkeit ist auf die Kristallitbildung an der Oberfläche zurückzuführen und für die hervorragenden tribologischen Eigenschaften verantwortlich.

In einer vorteilhaften Ausgestaltung weist die Gleitschicht eine Dicke zwischen ca. 50 µm und ca. 300 µm, insbesondere zwischen ca. 70 µm und ca. 150 µm auf. Dadurch weist die Gleitschicht einen hohen mechanischen Widerstand auf und dient als Korrosionsschutz für das Innenrohr.

In einer vorteilhaften Ausgestaltung ist auf die Außenumfangsfläche des Innenrohrs eine Haftschicht aufgebracht. Die Haftschicht sorgt für eine verbesserste Haftung der thermoplastischen Gleitschicht auf dem Innenrohr. Die Haftschicht ist somit zwischen der Außenumfangsfläche des Innenrohrs und der Gleitschicht angeordnet. Die Haftschicht ist bevorzugt aus einem Epoxidharz. Die Haftschicht kann mittels Lackieren und/oder Pulverbeschichtung, insbesondere mittels elektrostatischer Pulverbeschichtung auf die Außenumfangsfläche des Innenrohrs aufgebracht sein. So wird auf eine für eine Haftung geeignete, kostengünstig herzustellende Oberfläche des Metalls, zum Beispiel einer gestrahlten Oberfläche oder einer Konversionsschicht, zunächst die Haftschicht aufgetragen. Auf die Haftschicht, zum Beispiel auf Basis eines Epoxidharzes, wird anschließend die Gleitschicht aus Polyoxymethylen, Polyamid, Polyethylenterephthalat, Polybutylenterephthalat, Polytetrafluorethylen oder Polyketon aufgetragen. Ferner dient die Haftschicht zusammen mit der Gleitschicht als Korrosionsschutz für das Innenrohr. Vorteilhaft ist die Haftschicht ein Haftvermittler. Die Haftschicht weist vorteilhaft eine Schichtstärke von 10 bis 100 µm, bevorzugt zwischen 20 und 40 µm auf. Ferner kann eine zweite Haftschicht auf die Gleithülse aufgebracht sein, an die der erste Elastomerkörper anvulkanisiert wird. Die zweite Haftschicht kann mittels eines Lackierprozesses, Sprühen, Tauchen, Dip-Spin oder Rollen aufgebracht sein. Die zweite Haftschicht dient als Haftvermittler für den ersten Elastomerkörper auf der Gleithülse. Die Haftschicht kann vorliegend auch als Primer- beziehungsweise Coverschicht bezeichnet werden.

In einer vorteilhaften Ausgestaltung weist die Gleithülse auf einer der Gleitschicht zugewandten Fläche wenigstens eine Ausnehmung zur Aufnahme eines Schmiermittels auf. Die Ausnehmung dient als Depot für ein Schmiermittel. Bevorzugt erstreckt sich die Ausnehmung in Längsrichtung der Lagerbuchse. Weiterhin bevorzugt ist die Ausnehmung als Schmiermittelnut ausgebildet. Vorteilhaft ist die Ausnehmung in einer Innenumfangsfläche der Gleithülse eingebracht. Ferner können mehrere Ausnehmungen in die der Gleitschicht zugwandten Fläche der Gleithülse eingebracht sein. Das Schmiermittel verringert die Reibung zwischen den beiden Gleitkörpern und verbessert die Losbrech- sowie Gleiteigenschaften. Da der Kunststoff an der Oberfläche der Gleitschicht einen Kristallinitätsgrad von mindestens 80 % seines maximalen theoretischen Wertes aufweist, weist die Gleitschicht eine raue, unebene Oberfläche auf. Infolgedessen kann sich das Schmiermittel in den Unebenheiten einlagern, so dass die Vertiefungen der Unebenheiten als Schmiermitteldepot dienen.

In einer vorteilhaften Ausgestaltung ist das Schmiermittel ein Fett, das eine Konsistenzkennzahl von zwischen ca. 1 und ca. 4, insbesondere zwischen ca. 2 und ca. 3 aufweist. Die Konsistenzkennzahl bezieht sich vorliegend auf die NLGI-Klasse nach DIN 51818.

In einer vorteilhaften Ausgestaltung ist die Gleithülse geschlitzt oder mehrteilig ausgebildet. Dadurch kann bei der Montage der Lagerbuchse in ein Lageraufnahmeauge die Gleithülse eine Vorspannung auf die Gleitschicht ausüben, um einen spielfreien Kontakt der Gleitpaarung zu erzielen. Vorteilhaft weist die Gleithülse einen durchgehenden Schlitz auf.

In einer vorteilhaften Ausgestaltung ist das Elastomerlager formschlüssig, kraftschlüssig und/oder stoffschlüssig mit der Gleithülse verbunden. Bevorzugt wird der erste Elastomerkörper des Elastomerlagers mit der Gleithülse verbunden. Wenn die Gleithülse aus PA6 oder PA66 ist, wird bevorzugt der erste Elastomerkörper stoffschlüssig mit der Gleithülse verbunden, indem der erste Elastomerkörper an die Gleithülse unter Einsatz eines ein- oder mehrkomponentigen Haftvermittlers anvulkanisiert wird. Wenn die Gleithülse aus Polyoxymethylen oder PA12 ist, wird der erste Elastomerkörper vorzugsweise formschlüssig und/oder kraftschlüssig mit der Gleithülse verbunden. So kann der Elastomerkörper auf die Gleithülse aufgeschoben, insbesondere aufgepresst werden.

In einer vorteilhaften Ausgestaltung ist das Elastomerlager geschlitzt oder mehrteilig ausgebildet. Dadurch kann bei der Montage der Lagerbuchse in ein Lageraufnahmeauge eine Vorspannung auf die Gleitpaarung aufgebracht werden, um einen spielfreien Kontakt zwischen den Gleitpartnern einzustellen. Vorteilhaft weist das Elastomerlager einen durchgehenden Schlitz auf.

In einer vorteilhaften Ausgestaltung weist das Elastomerlager eine Innenhülse auf, die die Gleithülse umgibt. Die Innenhülse ist formschlüssig und/oder kraftschlüssig mit der Gleithülse verbunden, insbesondere ist die Innenhülse auf die Gleithülse aufgeschoben, insbesondere aufgepresst, wobei an die Innenhülse, insbesondere eine Außenmantelfläche der Innenhülse, der erste Elastomerkörper anvulkanisiert wird.

Das Elastomerlager kann einen zweiten Elastomerkörper aufweisen, der mit einer Innenumfangsfläche der Innenhülse verbunden ist. Mittels des zweiten Elastomerkörpers kann eine Vorspannung auf die Gleithülse aufgebracht werden, um so einen spielfreien Kontakt der Gleitpaarung einzustellen. Der zweite Elastomerkörper kann eine durchgehende Elastomerspur sein oder aus einer Vielzahl an zueinander beabstandeten Elastomerelementen, wie beispielsweise Vorsprünge oder Rippen, gebildet sein. Bevorzugt ragt die zweite Elastomerspur radial einwärts von der Innenhülse ab.

In einer vorteilhaften Ausgestaltung ist ein Dichtungssystem vorgesehen, das einen Gleitspalt abdichtet. Das Dichtungssystem verhindert ein Eindringen von Umwelteinflüssen in den zwischen den beiden Gleitpartnern gebildeten Gleitspalt. Das Dichtungssystem kann aus dem Elastomerkörper des Elastomerlagers gebildet sein. Ferner kann das Dichtungssystem ein separates Dichtungselement sein, das mit der Lagerbuchse verbunden wird. Bevorzugt ist das Dichtungssystem als wenigstens eine von dem ersten Elastomerkörper des Elastomerlagers abragende Dichtlippe ausgebildet.

Ferner kann eine Wegbegrenzungsvorrichtung vorgesehen sein, die eine Bewegung der Gleithülse in Längsrichtung der Lagerbuchse begrenzt. Die Anschlageinrichtung kann zwei Platten aufweisen, wobei jeweils eine Platte stirnseitig auf das Innenrohr aufgeschoben, insbesondere aufgepresst ist.

Nachfolgend werden die Lagerbuchse sowie weitere Merkmale und Vorteile anhand von Ausführungsbeispielen näher erläutert, die in den Figuren schematisch dargestellt sind. Hierin zeigen:
- Fig. 1: einen Längsschnitt durch eine Lagerbuchse gemäß einer ersten Ausführungsform;
- Fig. 2: einen Querschnitt durch die in Fig. 1 gezeigte Lagerbuchse entlang der Linie II-II;
- Fig. 3: einen vergrößerten Querschnitt durch ein Innenrohr mit einer darauf aufgebrachten Gleitschicht;
- Fig. 4: einen vergrößerten Ausschnitt der Einzelheit IV aus Fig. 3;
- Fig. 5: einen vergrößerten Querschnitt durch eine Gleithülse;
- Fig. 6: einen Längsschnitt durch eine Lagerbuchse gemäß einer zweiten Ausführungsform;
- Fig. 7: einen Querschnitt durch die in Fig. 6 gezeigte Lagerbuchse entlang der Linie VI-VI;
- Fig. 8: einen Querschnitt durch eine Lagerbuchse gemäß einer dritten Ausführungsform; und
- Fig. 9: einen Querschnitt durch das in Fig. 8 gezeigte Elastomerlager.

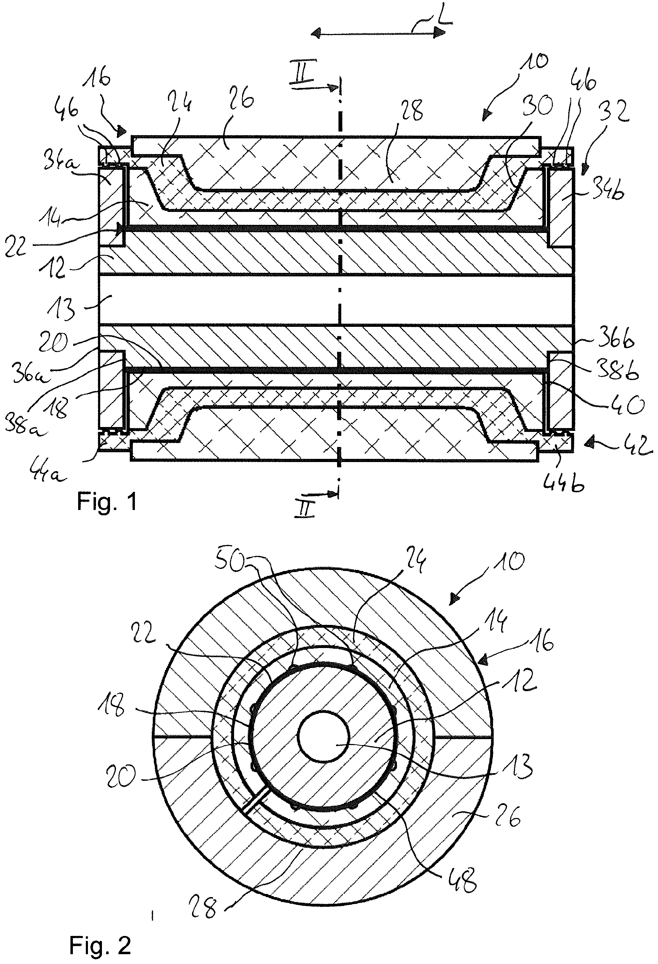

In den Figuren 1 und 2 ist eine Lagerbuchse 10 gezeigt, die zur Lagerung eines nicht dargestellten Kraftfahrzeugteils, insbesondere eines Fahrwerkbauteils, wie beispielsweise einer Blattfeder, dient. Hierzu wird die Lagerbuchse 10 in ein nicht dargestelltes Lageraufnahmeauge eingesetzt, insbesondere eingepresst.

Die Lagerbuchse 10 weist ein Innenrohr 12 aus einem Metall, eine Gleithülse 14 aus einem ersten Kunststoff, die drehbeweglich auf dem Innenrohr 12 gelagert ist, und ein Elastomerlager 16 auf.

Das Innenrohr 12 ist vorzugsweise aus Stahl oder Aluminium und weist eine Aufnahmeöffnung 13 zum Verbinden eines nicht dargestellten Kraftfahrzeugteils mit der Lagerbuchse 10 auf.

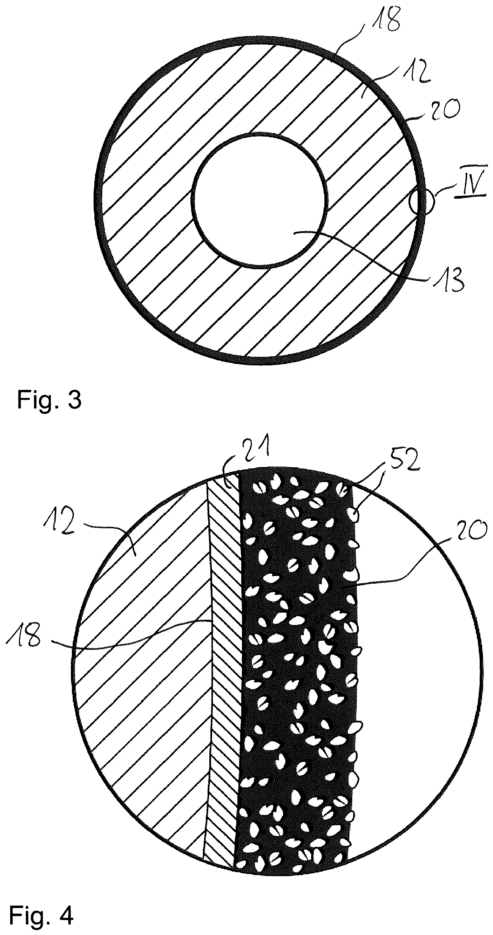

Wie insbesondere in den Figuren 3 und 4 ersichtlich ist, ist auf eine Außenumfangsfläche 18 des Innenrohrs 12 eine Haftschicht 21 aufgebracht. Die Haftschicht 21 ist vorliegend ein Haftvermittler aus einem Epoxidharz und wird bevorzugt mittels elektrostatischer Pulverbeschichtung aufgebracht. Die Haftschicht 21 weist vorteilhaft eine Schichtstärke von 10 bis 100 µm, bevorzugt zwischen 20 und 40 µm auf. Auf die Haftschicht 21 ist eine Gleitschicht 20 aus einem zweiten Kunststoff aufgebracht, wobei die Gleithülse 14 und die Gleitschicht 20 eine Gleitpaarung 22 bilden. Die Gleitschicht 20 wird bevorzugt mittels elektrostatischer Pulverbeschichtung auf die Haftschicht 21 aufgebracht und weist eine Dicke zwischen ca. 50 µm und ca. 300 µm, insbesondere zwischen ca. 80 µm und ca. 200 µm auf. Darüber hinaus kann die Gleitschicht 20 auch unmittelbar auf die Außenumfangsfläche 18 des Innenrohrs 12 aufgebracht sein.

Die Gleitschicht 20 bildet dabei eine kontinuierliche Polymerschicht auf dem Innenrohr 12 aus, wobei die Gleitschicht 20 aus den Gruppen der Polyamide (PA), der Polyoxymethylene (POM), der Polyketone (PK), der Fluorpolymere, der Polyethylenterephthalate (PET) oder der Polybutylenterephthalate (PBT) sein kann.

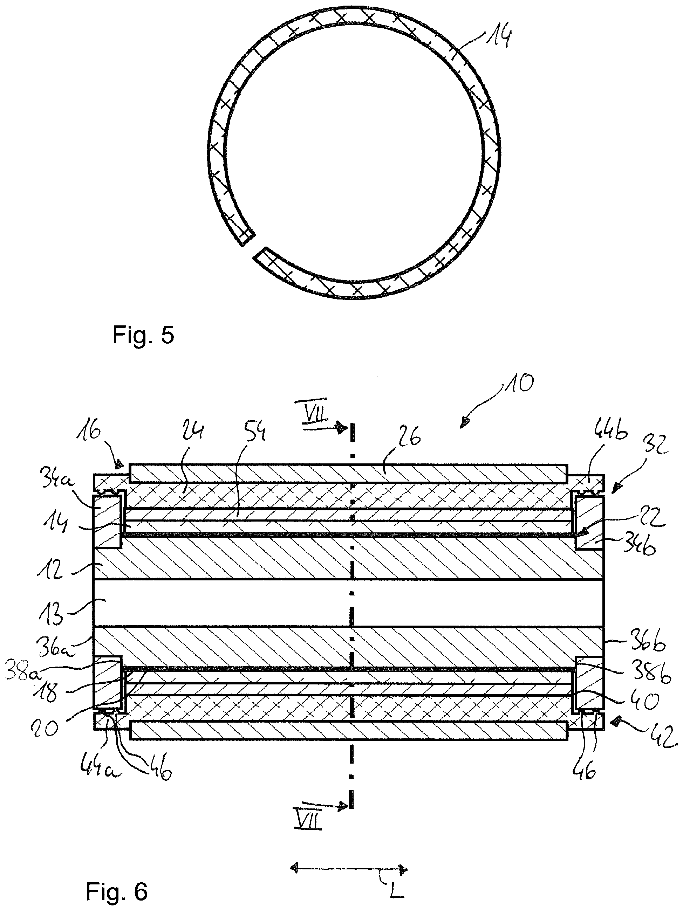

Gemäß Fig. 5 ist die Gleithülse 14 geschlitzt. Dadurch kann bei der Montage der Lagerbuchse 10 in ein Lageraufnahmeauge eine Vorspannung auf die Gleitpaarung 22 aufgebracht werden, um einen spielfreien Kontakt zwischen der Gleithülse 14 und der Gleitschicht 20 einzustellen. Die Gleithülse 14 kann aus den Gruppen der Polyamide (PA), der Polyoxymethylene (POM), der Polyketone (PK), der Fluorpolymere, der Polyethylenterephthalate (PET) oder der Polybutylenterephthalate (PBT) sein.

Wenn die Gleitschicht 20 aus Polyamid ist, dann ist die Gleithülse 14 aus Polyoxymethylen, Polyethylenterephthalate, Polybutylenterephthalate oder Polyketon. Wenn die Gleitschicht 20 aus Polyoxymethylen ist, dann ist die Gleithülse 14 aus Polyamid, Polyethylenterephthalate, Polybutylenterephthalate oder Polyketon. Wenn die Gleitschicht 20 aus Polybutylenterephthalate ist, dann ist die Gleithülse 14 aus Polyoxymethylen, Polyamid, oder Polyketon. Wenn die Gleitschicht 20 aus Polyketon ist, dann ist die Gleithülse 14 aus Polyamid, Polyethylenterephthalate, Polybutylenterephthalate oder Polyoxymethylen, kann aber auch aus Polyketon sein.

Das Polyoxymethylen kann ein Polyoxymethylen-Copolymer (POM-C) oder ein Polyoxymethylen-Homopolymer (POM-H) sein. Das Polyamid kann ein aliphatisches Polyamid oder ein teilaromatisches Polyamid sein. Aliphatische Polyamide können Polyamid 6 (PA6), Polyamid 12 (PA12), Polyamid 46 (PA46), Polyamid 66 (PA66) oder Polyamid 666 (PA666) sein.

Zur Verbesserung der tribologischen, mechanischen und/oder thermischen Eigenschaften der Gleitschicht 20 kann in die Gleitschicht 20 wenigstens ein Additiv 52 eingebettet sein, wie in Fig. 4 ersichtlich ist. Das Additiv 52 kann Polytetrafluorethylen (PTFE), Graphit, Kohlenstoffnanofasern, Kohlenstofffasern, Aramidfasern, Mineralien, Molybdändisulfid, Talkum, Öle, Wachse, Glaskugeln und/oder Glasfasern sein. Wie zudem in Fig. 4 ersichtlich ist, ist das Additiv 52 derart statistisch in der Gleitschicht 20 eingebettet, dass das Additiv 52 auch direkt an der Oberfläche der Gleitschicht 20 angeordnet ist und somit sofort tribologisch wirksam werden kann.

Das Elastomerlager 16 weist einen ersten Elastomerkörper 24 und eine Außenhülse 26 auf und ist formschlüssig, kraftschlüssig und/oder stoffschlüssig mit der Gleithülse 14 verbunden. Bei der in den Figuren 1 und 2 gezeigten Ausführungsform ist das Elastomerlager 16 stoffschlüssig mit der Gleithülse 14 verbunden, indem der erste Elastomerkörper 24 an die Gleithülse 14 anvulkanisiert ist. Der erste Elastomerkörper 24 ist ebenfalls geschlitzt, um bei der Montage der Lagerbuchse 10 in ein Lageraufnahmeauge eine Vorspannung auf die Gleitpaarung 22 aufzubringen und so einen spielfreien Kontakt zwischen der Gleithülse 14 und der Gleitschicht 20 einzustellen.

Wie zudem in Figur 2 ersichtlich, ist die Außenhülse 26 zweiteilig ausgebildet, wobei die Außenhülse 26 einen Vorsprung 28 aufweist, der radial einwärts in eine dazu korrespondierende Aussparung 30 der Gleithülse 14 hineinragt. Die Außenhülse 26 kann aus einem Metall oder aus einem Kunststoff sein.

Die Lagerbuchse 10 weist ferner eine Anschlageinrichtung 32 auf, die eine Bewegung der Gleithülse 14 gegenüber dem Innenrohr 12 in Längsrichtung L der Lagerbuchse 10 begrenzt. Die Anschlageinrichtung 32 weist eine erste Ringscheibe 34a und eine zweite Ringscheibe 34b auf, wobei die erste Ringscheibe 34a mit einer ersten Stirnseite 36a des Innenrohrs 12 und die zweite Ringscheibe 34b mit einer zweiten Stirnseite 36b des Innenrohrs 12 verbunden sind. Hierzu weist die erste Stirnseite 36a einen ersten Absatz 38a und die zweite Stirnseite 36b einen zweiten Absatz 38b, wobei die erste Ringscheibe 34a auf den ersten Absatz 38a aufgeschoben, insbesondere aufgepresst ist und die zweite Ringscheibe 34b ist auf den zweiten Absatz 38b aufgeschoben, insbesondere aufgepresst.

Zur Abdichtung eines Gleitspalts 40 ist ein Dichtungssystem 42 vorgesehen. Das Dichtungssystem 42 ist aus einem ersten überstehenden axialen Endbereich 44a des ersten Elastomerkörpers 24 und einem zweiten axial überstehenden Endbereich 44b des ersten Elastomerkörpers 24 gebildet. Wobei an jedem Endbereich 44a, 44b zwei radial einwärts abragende Dichtlippen 46 angeordnet sind. Die Dichtlippen 46 liegen dabei an den Ringscheiben 34a, 34b an, um so den Gleitspalt 40 vor ein Eindringen von Umwelteinflüssen zuverlässig abzudichten.

Zur Reduzierung der Reibung innerhalb der Gleitpaarung 22, weist die Gleithülse 14 auf einer Innenfläche 48 mehrere in Axialrichtung A erstreckende Ausnehmungen 50 auf, die als Schmiermitteldepot dienen, wie in Fig. 2 ersichtlich ist.

Im Folgenden werden weitere Ausführungsformen für die Lagerbuchse 10 sowie das Elastomerlager 16 beschrieben, wobei für gleiche und funktionsgleiche Teile dieselben Bezugszeichen verwendet werden.

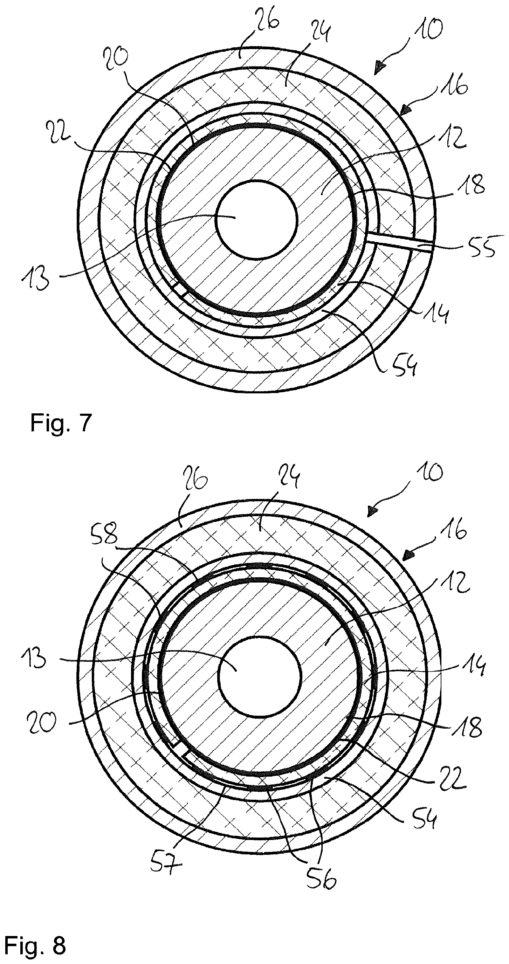

In den Figuren 6 und 7 ist eine zweite Ausführungsform der Lagerbuchse 10 gezeigt, die sich von der ersten Ausführungsform dadurch unterscheidet, dass das Elastomerlager 16 eine Innenhülse 54 aufweist, die stoffschlüssig mit dem ersten Elastomerkörper 24 verbunden, insbesondere anvulkanisiert ist. Die Innenhülse 54 aus Metall oder Kunststoff ist ihrerseits auf die Gleithülse 14 aufgeschoben, insbesondere aufgepresst. Bei der zweiten Ausführungsform ist die Außenhülse 26 einteilig ausgebildet und weist keinen Vorsprung 28 auf, der in eine korrespondierende Aussparung 30 der Gleithülse 14 einliegt.

Gemäß Figur 7 sind die Gleithülse 14, die Innenhülse 54, der erste Elastomerkörper 24 und die Außenhülse 26 geschlitzt. Insbesondere weist das Elastomerlager 16 einen durch die Außenhülse 26, den ersten Elastomerkörper 24 und die Innenhülse 54 durchgehenden Schlitz 55 auf. Darüber hinaus weist die Gleithülse 14 bei der zweiten Ausführungsform keine als Schmiermitteldepot dienenden Ausnehmungen 50 auf.

In Figur 8 ist eine dritte Ausführungsform der Lagerbuchse 10 gezeigt, die sich insbesondere von der zweiten Ausführungsform dadurch unterscheidet, dass das Elastomerlager 16 einen zweiten Elastomerkörper 56 aufweist, der mit einer Innenseite 57 der Zwischenbuchse 54 verbunden ist.

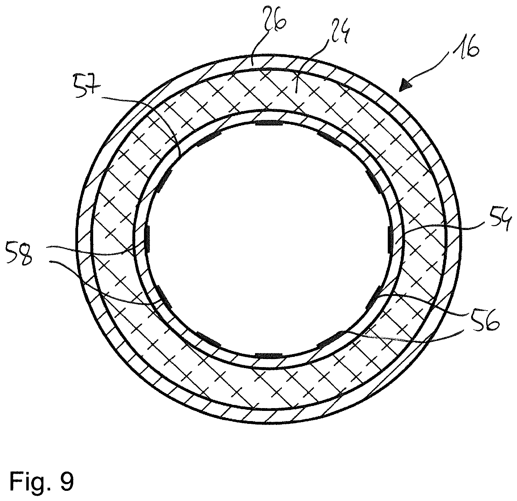

Wie insbesondere in Figur 9 ersichtlich ist, ist der zweite Elastomerkörper 56 aus radial einwärts abragenden Aufdickungen 58 gebildet. Der zweite Elastomerkörper 56 dient dazu, zusammen mit der geschlitzten Gleithülse 14 während der Montage der Lagerbuchse 10 eine Vorspannung auf die Gleitpaarung 22 aufzubringen und so einen spielfreien Kontakt zwischen der Gleithülse 14 und der Gleitschicht 20 einzustellen.

### Bezugszeichenliste

- 10: Lagerbuchse
- 12: Innenrohr
- 13: Aufnahmeöffnung
- 14: Gleithülse
- 16: Elastomerlager
- 18: Außenumfangsfläche
- 20: Gleitschicht
- 21: Haftschicht
- 22: Gleitpaarung
- 24: erster Elastomerkörper
- 26: Außenhülse
- 28: Vorsprung
- 30: Aussparung
- 32: Anschlageinrichtung
- 34a: erste Ringscheibe
- 34b: zweite Ringscheibe
- 36a: erste Stirnseite
- 36b: zweite Stirnseite
- 38a: erster Absatz
- 38b: zweiter Absatz
- 40: Gleitspalt
- 42: Dichtungssystem
- 44a: erster axial überstehender Endbereich
- 44b: zweiter axial überstehender Endbereich
- 46: Dichtlippe
- 48: Innenumfangsfläche
- 50: Ausnehmung
- 52: Additiv PTFE
- 54: Innenhülse
- 55: Schlitz
- 56: zweiter Elastomerkörper
- 57: Innenseite
- 58: Aufdickung
- L: Längsrichtung

## Patentansprüche

1. Lagerbuchse (10) zur Lagerung eines Kraftfahrzeugteils, aufweisend ein Innenrohr (12) aus einem Metall, eine Gleithülse (14) aus einem ersten Kunststoff, die drehbeweglich auf dem Innenrohr (12) gelagert ist, und ein Elastomerlager (16), das die Gleithülse (14) umgibt und wenigstens einen ersten Elastomerkörper (24) und eine Außenhülse (26) aufweist, **dadurch gekennzeichnet, dass** auf eine Außenumfangsfläche (18) des Innenrohrs (12) eine Gleitschicht (20) aus einem zweiten Kunststoff aufgebracht ist, wobei der erste Kunststoff und der zweite Kunststoff eine Gleitpaarung (22) entweder aus zwei verschiedenen Polymeren aus den Gruppen der Polyamide, der Polyoxymethylene, der Polyketone, der Fluorpolymere, der Polyethylenterephthalate oder der Polybutylenterephthalate gebildet, oder die Gleitpaarung wird aus Polyketon gegen Polyketon gebildet, wobei die Polymere der Gleitpaarungen jeweils in einer kontinuierlichen, thermoplastischen Polymerphase vorliegen.

2. Lagerbuchse (10) nach Anspruch 1, **dadurch gekennzeichnet, dass** das Polyoxymethylen ein Polyoxymethylen-Copolymer oder ein Polyoxymethylen-Homopolymer ist.

3. Lagerbuchse (10) nach Anspruch 1 oder 2, **dadurch gekennzeichnet, dass** das Polyamid ein aliphatisches Polyamid oder ein teilaromatisches Polyamid ist.

4. Lagerbuchse (10) nach einem der vorhergehenden Ansprüche, **dadurch gekennzeichnet, dass** die Gleithülse (14) und/oder die Gleitschicht (20) wenigstens ein Additiv (52) aufweist.

5. Lagerbuchse (10) nach Anspruch 4, **dadurch gekennzeichnet, dass** das Additiv (52) Polytetrafluorethylen, Grafit, Kohlenstoffnanofasern, Kohlenstofffasern, Aramidfasern, Mineralien, Molybdändisulfid, Talkum, Öle, Wachse, Glaskugeln und/oder Glasfasern aufweist.

6. Lagerbuchse (10) nach einem der vorhergehenden Ansprüche, **dadurch gekennzeichnet, dass** die Gleitschicht (20) mittels eines Pulverbeschichtungsverfahrens aufgebracht ist.

7. Lagerbuchse (10) nach einem der vorhergehenden Ansprüche, **dadurch gekennzeichnet, dass** die Gleitschicht (20) eine Dicke zwischen ca. 50 µm und ca. 300 µm, insbesondere zwischen ca. 70 µm und ca. 150 µm aufweist.

8. Lagerbuchse (10) nach einem der vorhergehenden Ansprüche, **dadurch gekennzeichnet, dass** auf die Außenumfangsfläche (18) des Innenrohrs (12) eine Haftschicht (21) aufgebracht ist.

9. Lagerbuchse (10) nach einem der vorhergehenden Ansprüche, **dadurch gekennzeichnet, dass** die Gleithülse (14) auf einer der Gleitschicht (20) zugewandten Fläche wenigstens eine Ausnehmung (50) zur Aufnahme eines Schmiermittels aufweist.

10. Lagerbuchse (10) nach einem der vorhergehenden Ansprüche, **dadurch gekennzeichnet, dass** die Gleithülse (14) geschlitzt oder mehrteilig ausgebildet ist.

11. Lagerbuchse (10) nach einem der vorhergehenden Ansprüche, **dadurch gekennzeichnet, dass** das Elastomerlager (16) geschlitzt oder mehrteilig ausgebildet ist.

12. Lagerbuchse (10) nach einem der vorhergehenden Ansprüche, **dadurch gekennzeichnet, dass** das Elastomerlager (16) formschlüssig, kraftschlüssig und/oder stoffschlüssig mit der Gleithülse (14) verbunden ist.

13. Lagerbuchse (10) nach einem der vorhergehenden Ansprüche, **dadurch gekennzeichnet, dass** das Elastomerlager (16) eine Innenhülse (54) aufweist, die die Gleithülse (14) umgibt.

14. Lagerbuchse (10) nach Anspruch 13, **dadurch gekennzeichnet, dass** das Elastomerlager (16) einen zweiten Elastomerkörper (56) aufweist, der mit einer Innenumfangsfläche (48) der Innenhülse (54) verbunden ist.

15. Lagerbuchse (10) nach einem der vorhergehenden Ansprüche, **dadurch gekennzeichnet, dass** ein Dichtungssystem (42) vorgesehen ist, das einen Gleitspalt (40) abdichtet.

16. Lagerbuchse (10) nach einem der vorhergehenden Ansprüche, **dadurch gekennzeichnet, dass** eine Wegbegrenzungsvorrichtung (32) vorgesehen ist, die eine Bewegung der Gleithülse (14) in eine Längsrichtung (L) der Lagerbuchse (10) begrenzt.

## Claims

1. Bearing bush (10) for supporting a motor vehicle part, having an inner tube (12) made of a metal, a sliding sleeve (14) made of a first plastic material mounted rotatably on the inner tube (12), and an elastomer bearing (16) which surrounds the sliding sleeve (14) and has at least a first elastomer body (24) and an outer sleeve (26), **characterised in that** a sliding layer (20) made of a second plastic material is applied to an outer circumferential surface (18) of the inner tube (12), the first plastic material and the second plastic material forming a tribological pairing (22) either of two different polymers from the groups of polyamides, polyoxymethylenes, polyketones, fluoropolymers, polyethylene terephthalates or polybutylene terephthalates, or the tribological pairing being formed from polyketone against polyketone, wherein the polymers of the tribological pairings each are present in a continuous thermoplastic polymer phase.

2. Bearing bush (10) according to claim 1, **characterised in that** the polyoxymethylene is a polyoxymethylene copolymer or a polyoxymethylene homopolymer.

3. Bearing bush (10) according to claim 1 or 2, **characterised in that** the polyamide is an aliphatic polyamide or a partially aromatic polyamide.

4. Bearing bush (10) according to any one of the preceding claims, **characterised in that** the sliding sleeve (14) and/or the sliding layer (20) has at least one additive (52).

5. Bearing bush (10) according to claim 4, **characterised in that** the additive (52) comprises polytetrafluoroethylene, graphite, carbon nanofibres, carbon fibres, aramid fibres, minerals, molybdenum disulphide, talcum, oils, waxes, glass beads and/or glass fibres.

6. Bearing bush (10) according to any one of the preceding claims, **characterised in that** the sliding layer (20) is applied by means of a powder coating process.

7. Bearing bush (10) according to any one of the preceding claims, **characterised in that** the sliding layer (20) has a thickness between approx. 50 µm and approx. 300 µm, in particular between approx. 70 µm and approx. 150 µm.

8. Bearing bush (10) according to any one of the preceding claims, **characterised in that** an adhesive layer (21) is applied to the outer circumferential surface (18) of the inner tube (12).

9. Bearing bush (10) according to any one of the preceding claims, **characterised in that**, on a surface facing the sliding layer (20), the sliding sleeve (14) has at least one recess (50) for receiving a lubricant.

10. Bearing bush (10) according to any one of the preceding claims, **characterised in that** the sliding sleeve (14) is slotted or formed in several parts.

11. Bearing bush (10) according to any one of the preceding claims, **characterised in that** the elastomer bearing (16) is slotted or formed in several parts.

12. Bearing bush (10) according to any one of the preceding claims, **characterised in that** the elastomer bearing (16) is connected to the sliding sleeve (14) in a form-locking, force-locking and/or material-locking manner.

13. Bearing bush (10) according to any one of the preceding claims, **characterised in that** the elastomer bearing (16) includes an inner sleeve (54) enclosing the sliding sleeve (14).

14. Bearing bush (10) according to claim 13, **characterised in that** the elastomer bearing (16) has a second elastomer body (56) which is connected to an inner circumferential surface (48) of the inner sleeve (54).

15. Bearing bush (10) according to any one of the preceding claims, **characterised in that** a sealing system (42) is provided which seals a sliding gap (40).

16. Bearing bush (10) according to any one of the preceding claims, **characterised in that** a path limiting device (32) is provided which limits movement of the sliding sleeve (14) in a longitudinal direction (L) of the bearing bush (10).

## Revendications

1. Coussinet de palier (10) pour monter une partie d'un véhicule automobile, comportant un tube intérieur (12) en un métal, une douille coulissante (14) en une première matière plastique montée mobile en rotation sur le tube intérieur (12), et un palier élastomère (16) qui entoure la douille coulissante (14) et qui comprend au moins un premier corps élastomère (24) et une douille extérieure (26),
**caractérisé en ce que**
une couche de coulissement (20) en une seconde matière plastique est déposée sur une surface périphérique extérieure (18) du tube intérieur (12), la première matière plastique et la seconde matière plastique constituent un appariement de coulissement (22) soit en deux polymères différents parmi les groupes des polyamides, polyoxyméthylènes, polycétones, fluoropolymères, polyéthylènes téréphtalates ou polybutylènes téréphtalates, soit l'appariement de coulissement est formé en polycétone sur polycétone, les polymères des appariements de coulissement se présentant chacun en une phase polymère continue thermoplastique.

2. Coussinet de palier (10) selon la revendication 1,
**caractérisé en ce que**
le polyoxyméthylène est un copolymère de polyoxyméthlène ou un homopolymère de polyoxyméthylène.

3. Coussinet de palier (10) selon la revendication 1 ou 2,
**caractérisé en ce que**
le polyamide est un polyamide aliphatique ou un polyamide partiellement aromatique.

4. Coussinet de palier (10) selon l'une des revendications précédentes,
**caractérisé en ce que**
la douille coulissante (14) et/ou la couche de coulissement (20) présente(nt) au moins un additif (52).

5. Coussinet de palier (10) selon la revendication 4,
**caractérisé en ce que**
l'additif (52) est du polytétrafluoroéthylène, du graphite, des nanofibres de carbone, des fibres de carbone, des fibres d'aramide, des minéraux, du bisulfure de molybdène, du talc, des huiles, des cires, des billes de verre et/ou des fibres de verre.

6. Coussinet de palier (10) selon l'une des revendications précédentes,
**caractérisé en ce que**
la couche de coulissement (20) est déposée par un procédé de revêtement de poudre.

7. Coussinet de palier (10) selon l'une des revendications précédentes,
**caractérisé en ce que**
la couche de coulissement (20) présente une épaisseur comprise entre environ 50 µm et environ 300 µm, en particulier entre environ 70 µm et environ 150 µm.

8. Coussinet de palier (10) selon l'une des revendications précédentes,
**caractérisé en ce que**
une couche adhésive (21) est déposée sur la surface périphérique extérieure (18) du tube intérieur (12).

9. Coussinet de palier (10) selon l'une des revendications précédentes,
**caractérisé en ce que**
la douille coulissante (14) présente au moins un évidement (50) pour recevoir un lubrifiant sur une surface tournée vers la couche de coulissement (20).

10. Coussinet de palier (10) selon l'une des revendications précédentes,
**caractérisé en ce que**
la douille coulissante (14) est fendue ou réalisée en plusieurs pièces.

11. Coussinet de palier (10) selon l'une des revendications précédentes,
**caractérisé en ce que**
le palier élastomère (16) est fendu ou réalisé en plusieurs pièces.

12. Coussinet de palier (10) selon l'une des revendications précédentes,
**caractérisé en ce que**
le palier élastomère (16) est relié par coopération de forme, par coopération de force et/ou par coopération de matière à la douille coulissante (14).

13. Coussinet de palier (10) selon l'une des revendications précédentes,
**caractérisé en ce que**
le palier élastomère (16) comprend une douille intérieure (54) qui entoure la douille coulissante (14).

14. Coussinet de palier (10) selon la revendication 13,
**caractérisé en ce que**
le palier élastomère (16) comprend un second corps élastomère (56) qui est relié à une surface périphérique intérieure (48) de la douille intérieure (54).

15. Coussinet de palier (10) selon l'une des revendications précédentes,
**caractérisé en ce que**
il est prévu un système d'étanchéité (42) qui étanche une fente de coulissement.

16. Coussinet de palier (10) selon l'une des revendications précédentes,
**caractérisé en ce que**
il est prévu un dispositif de limitation de course (32) qui limite un mouvement de la douille coulissante (14) dans une direction longitudinale (L) du coussinet de palier (10).
